(19) Europäisches Patentamt
European Patent Office
Office européen des brevets

(11) **EP 3 246 549 B1**

(12) **EUROPEAN PATENT SPECIFICATION**

(45) Date of publication and mention of the grant of the patent:
**03.07.2019 Bulletin 2019/27**

(51) Int Cl.:
*F02D 41/10* (2006.01)    *F02D 41/14* (2006.01)
*F02D 41/00* (2006.01)

(21) Application number: **17168389.9**

(22) Date of filing: **27.04.2017**

(54) **A METHOD OF OPERATING AN ENGINE ASSEMBLY**

VERFAHREN ZUM BETRIEB EINER MOTORANORDNUNG

PROCÉDÉ DE FONCTIONNEMENT D'UN ENSEMBLE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2016 GB 201608717**
**18.05.2016 IN 201641017210**

(43) Date of publication of application:
**22.11.2017 Bulletin 2017/47**

(73) Proprietor: **Ford Global Technologies, LLC**
**Dearborn, MI 48126 (US)**

(72) Inventors:
• **DIXON, Jon**
**Maldon, Essex CM9 8DH (GB)**
• **HALLERON, Ian**
**Chelmsford, Essex CM3 4AE (GB)**
• **AREVALO, Andres**
**London, RM14 1NN (GB)**

(74) Representative: **Haseltine Lake Kempner LLP**
**Lincoln House, 5th Floor**
**300 High Holborn**
**London WC1V 7JH (GB)**

(56) References cited:
**EP-A1- 2 772 629        EP-A2- 0 984 153**
**DE-A1-102008 063 935    FR-A1- 3 021 702**
**US-A1- 2015 337 720      US-A1- 2016 131 089**
**US-B1- 6 718 767**

## Description

## Technical Field

The present disclosure relates to a method of operating an engine assembly and is particularly, although not exclusively, concerned with a method of operating an engine assembly in order to improve responsiveness of the engine assembly to control inputs.

## Background

Engines for vehicles, e.g. motor vehicles, are often provided with Exhaust Gas Recirculation (EGR) systems configured to recirculate a portion of the burnt exhaust gases to an inlet of the engine. Replacing a portion of the oxygen rich inlet air with burnt exhaust gases reduces the proportion of the contents of each cylinder that is available for combustion. This results in a lower heat release and lower peak cylinder temperature and thereby reduces the formation of NOx, improving the emissions performance of the vehicle.

Engines also often comprise a turbocharger comprising a compressor configured to increase the pressure of inlet air entering the engine, and hence, the amount of fuel that may be combusted within the engine to provide torque to drive the vehicle. The turbocharger responds to requests from a driver of the vehicle for increased torque to be supplied by the engine.

The operation of the EGR and turbocharger systems is interrelated and hence careful control of both systems is required to provide the driver with a good response to a request for increased torque from the engine, whilst maintaining good emissions performance.

When the driver requests increased torque to be supplied from the engine, e.g. by pressing an accelerator pedal of the vehicle, the operation of the turbocharger is controlled to provide increased inlet pressure to the engine. However, if the EGR system begins to recirculate too much burnt exhaust gases, the overall effect of the control of the turbocharger on the performance of the engine may be poor. The engine may therefore provide an inadequate response to the request for increased torque.

US 2015/337720 A1 teaches that a Variable Geometry Turbine (VGT) of an engine assembly should be controlled in order to provide an EXMP (exhaust manifold pressure) that maximises the mass flow rate through the engine, while minimising engine pumping losses by minimising the difference between exhaust manifold pressure and engine inlet pressure. In addition the EXMP set point should be selected to provide minimum EGR driving capability for minimising the difference in pressure. EP 2 772 629 A1 discloses a control of the exhaust pressure during a transient of a turbocharged engine with regard to a reliability holding limit by setting a maximum exhaust pressure threshold and a maximum rate of increase threshold. US 2016/131089 discloses the determination of a minimum exhaust pressure to have sufficient EGR capability as a function of EGR position and the possibility to apply a maximum rate of increase control. DE 10 2008 063935 A1 discloses a prediction of an exhaust pressure based on the current pressure increase gradient and performs correction if the prediction is above a reliability limit. FR 3 021 702 A1 determines an exhaust pressure response upstream the turbine in case of transient and calculates the EGR valve command based on this response. EP 0 984 153 A2 discloses a limitation of the change rate of turbine efficiency during a transient of a turbocharged engine with HP EGR, the limit being based on the pressure difference between exhaust manifold pressure and engine inlet pressure. US 6 718 767 B1 limits the rate of rise in the exhaust manifold pressure during a transient of a turbocharged engine in order to limit pumping losses.

## Statements of Invention

According to an aspect of the present disclosure, there is provided a method of operating an engine assembly, the engine assembly comprising:

  an engine;
  a turbocharger assembly, the operation of the turbocharger assembly being controllable in order to control a level of boost provided by the turbocharger assembly; and
  an Exhaust Gas Recirculation (EGR) duct configured to recirculate exhaust gases from a position upstream of a turbine of the turbocharger assembly, e.g. between an exhaust manifold of the engine and the turbine, to an inlet of the engine, the flow of exhaust gases within the EGR duct being controlled by an EGR valve, the method comprising:

    determining a pressure of exhaust gases upstream, e.g. immediately upstream, of the turbine, e.g. within the exhaust manifold or a high pressure exhaust duct;
    controlling the operation of the turbocharger assembly according to the pressure of the exhaust gases upstream of the turbine;

determining a position of the EGR valve (10a);

determining a maximum permitted rate of increase in pressure of the exhaust gases upstream of the turbine (14b) as a function of the position of the EGR valve; and

controlling the operation of the turbocharger assembly (14) such that the rate of increase in pressure of the exhaust gases is maintained at or below the maximum permitted rate.

The method may comprise determining a maximum permitted value of pressure of the exhaust gases upstream of the turbine. The operation of the turbocharger assembly may be controlled such that the pressure of the exhaust gases may be maintained at or below the maximum permitted value.

The method may further comprise determining a mass flow rate of exhaust gases through the turbine. The operation of the turbocharger assembly may be controlled at least partially according to the mass flow rate of exhaust gases through the turbine.

The pressure of exhaust gases upstream of the turbine may be determined by referring to a data model.

The method may be performed iteratively over a plurality of time steps. Each step of the method may be performed during each time step. Alternatively, one or more of the steps may be omitted when being performed within the iterative process. Iteration of the steps of the method may be continued until a predetermined period of time has elapsed.

The method may comprise detecting a request for an increased amount of torque to be supplied by the engine, e.g. from a driver or controller of the vehicle. The method may be performed iteratively over the plurality of time steps following detection of the request for increased torque.

The maximum permitted value of pressure may be determined by multiplying the maximum permitted rate of increase in pressure by the a particular period of time, for example, the length of the time step, to calculate a maximum permitted increase in pressure and adding the maximum permitted increase to the determined pressure of exhaust gases upstream of the turbine.

The turbocharger assembly may comprise a Variable Geometry Turbine (VGT). The operation of the turbocharger assembly may be controlled by varying the geometry of the VGT. Additionally or alternatively, the turbocharger assembly may comprise a turbocharger assembly bypass duct, configured to permit exhaust gases to bypass a turbocharger assembly of the turbocharger assembly. For example, the bypass duct may allow exhaust gases to bypass the turbine of the turbocharger assembly. The flow of exhaust gases through the bypass duct may be controlled by a bypass valve. The operation of the turbocharger assembly may be controlled by varying the position of the bypass valve.

The method may further comprise varying the position of the EGR valve such that the flow rate of exhaust gases within the EGR duct remains substantially constant. The operation of the turbocharger assembly may be controlled such that the positon of the EGR valve may be varied to maintain the flow rate of exhaust gases within the EGR duct at a substantially constant value.

According to another aspect of the present disclosure, there is provided an engine assembly for a motor vehicle, the engine assembly comprising:

an engine;

a turbocharger assembly, the operation of the turbocharger assembly being controllable in order to control a level of boost provided by the turbocharger assembly;

an Exhaust Gas Recirculation (EGR) duct configured to recirculate exhaust gases from a position upstream of a turbine of the turbocharger assembly, e.g. between an exhaust manifold of the engine and the turbine, to an inlet of the engine, the flow of exhaust gases within the EGR duct being controlled by an EGR valve; and

a controller configured to perform any of the above-mentioned methods.

The engine assembly may further comprise a low pressure EGR duct configured to recirculate exhaust gases from a position downstream of the turbine, e.g. between the turbine and an exhaust outlet, to a position upstream of a compressor of the turbocharger assembly.

The engine assembly may further comprise one or more exhaust gas after treatment devices provided downstream of the turbine. The engine assembly may comprise one or more pressure sensors configured to allow the pressure of exhaust gases upstream and/or downstream of the turbine to be measured. Additionally or alternatively, the controller may comprise one or more data models and/or look-up tables, e.g. stored on a memory associated with the controller, configured to allow the pressure upstream and/or downstream of the turbine to be determined.

According to another aspect of the present disclosure, there is provided a vehicle comprising the engine assembly according to a previously mentioned aspect of the disclosure.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

**Brief Description of the Drawings**

For a better understanding of the present invention, and to show more clearly how it may be carried into effect, reference will now be made, by way of example, to the accompanying drawings, in which:

Figure 1 is a schematic view of an engine assembly according to arrangements of the present disclosure;

Figure 2 is a schematic view of an engine assembly according to another arrangement of the present disclosure;

Figure 3 shows a method of operating an engine assembly according to an arrangement of the present disclosure;

Figure 4 shows a method of operating an engine assembly according to another arrangement of the present disclosure; and

Figure 5 shows an iterative process for applying the method of operating an engine assembly over a plurality of time steps, according to arrangements of the present disclosure.

**Detailed Description**

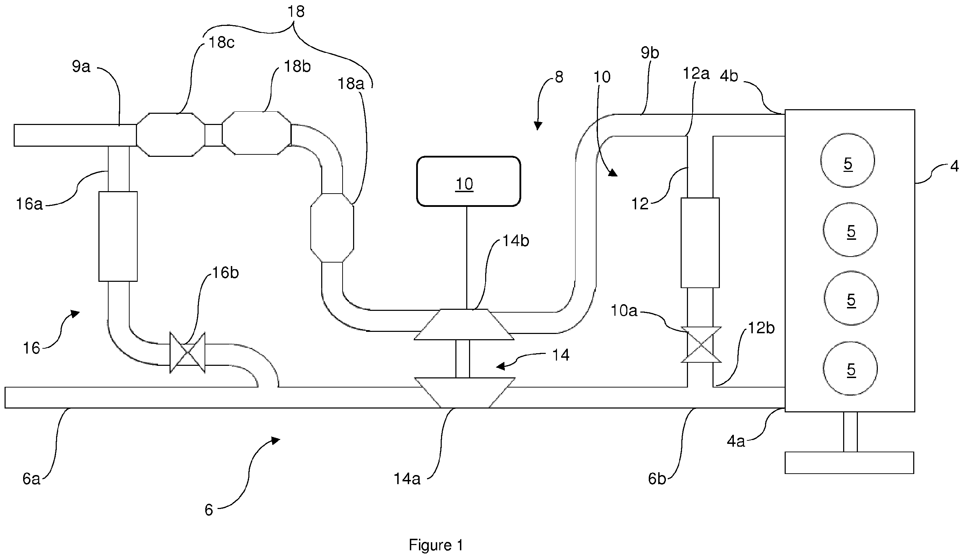

With reference to Figure 1, an engine assembly 2 for a vehicle, e.g. a motor vehicle, may comprise an engine 4, an intake system 6, an exhaust system 8, a High Pressure (HP) Exhaust Gas Recirculation (EGR) assembly 10 and a turbocharger assembly 14.

As depicted in Figure 1, the intake system 6 comprises a Low Pressure (LP) intake duct 6a provided upstream of a compressor 14a of the turbocharger assembly. The compressor 14a is configured to increase the pressure of inlet air arriving at the compressor 14a from the low pressure inlet duct 6a to a boost pressure level. Inlet air that has been compressed by the compressor 14a enters a high pressure inlet duct 6b. Inlet gases flow within the HP inlet duct 6b to an inlet manifold 4a of the engine and may be drawn into cylinders 5 of the engine 4.

The inlet gases are mixed with fuel within the cylinders 5 of the engine 4 and the fuel is combusted to provide power to drive the engine 4. Exhaust gases produced through this combustion are exhausted from the engine 4 via an exhaust manifold 4b into a high pressure exhaust duct 9b. Exhaust gases may flow through the HP exhaust duct 9b to a turbine 14b of the turbocharger assembly. The exhaust gases may be expanded through the turbine 14b to reach a low pressure exhaust duct 9a. The turbine 14b may be coupled to the compressor 14a via a shaft. Power may be generated by the turbine 14b, by expanding the exhaust gases through the turbine, to power the compressor 14a.

In the arrangement shown in Figure 1, the turbine 14b is a Variable Geometry Turbine (VGT) comprising variable inlet vanes (not shown), which are arranged at an angle relative to a rotor (not shown) of the turbine. By varying the angle of the inlet vanes relative to the rotor, the power generated by the turbine 14b, and hence, the power provided to the compressor 14a may be controlled. The level of boost provided by the turbocharger assembly 14 may therefore be controlled by varying the angle of the variable inlet vanes.

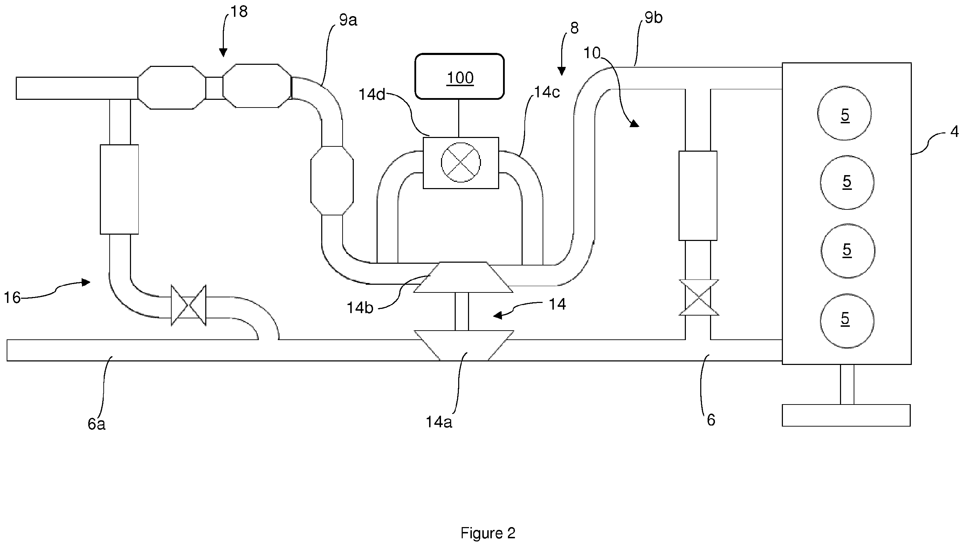

In some arrangements, the geometry of the turbine 14b may be fixed and the level of boost provided by the turbocharger assembly 14 may be controlled by an alternative means. For example, as shown in Figure 2, the turbocharger assembly 14 may comprise a turbocharger assembly bypass duct 14c configured to allow a portion of the exhaust gases to flow from the HP exhaust duct 9b to the LP exhaust duct 9a without passing through the turbine 14b. The flow of exhaust gases passing through the turbine bypass duct 14c may be controlled by a bypass valve 14d, such as a wastegate. By allowing a portion of the exhaust gasses to bypass the turbine 14b, the power generated by turbine 14b, and hence, the power available to drive the compressor 14a may be reduced. The level of boost provided by the turbocharger assembly 14 may therefore be reduced.

In other arrangements, the exhaust system 8 may comprise the VGT 14b and may also comprise the turbocharger bypass duct 14c and bypass valve 14d. In this arrangement, the power generated by the turbine 14b may be controlled by varying the geometry of the turbine 14b and/or by varying the position of the bypass valve 14d.

As mentioned above, increasing the pressure of inlet air entering the engine 4, e.g. the level of boost, allows a greater quantity of air to be drawn into the cylinders of the engine, which in turn allows more fuel to be mixed with the air and combusted. Burning more fuel within the engine 4 allows the engine to develop more power and torque to drive the vehicle. When a driver of the vehicle requests more power to be supplied by the engine 4, for example by pressing an accelerator pedal (not shown) of the vehicle, the turbocharger assembly 14 may be controlled to increase the level of boost provided by the turbocharger assembly, and hence, the power and torque generated by the engine.

With reference to Figures 1 and 2, the HP EGR assembly 10 comprises an EGR duct 12 configured to recirculate a portion of the exhaust gases leaving the engine 4 back to the intake system 6. The recirculated exhaust gases mix with inlet air within the intake system 6 and may be drawn back into the engine 4. A first end 12a of the HP EGR duct is coupled to and in fluid communication with the HP exhaust duct 9b at a position on the exhaust system 8 upstream of the turbine 14b. For example, the first end 12a of the HP EGR duct may be coupled to the exhaust manifold 4b. A second end 12b of the HP EGR duct may be coupled to and in fluid communication with the HP intake duct 6b, e.g. a position on the intake system 6 downstream of the compressor 14a.

The flow of exhaust gases within the HP EGR duct 12 is controlled by an HP EGR valve 10a. The flow rate of the exhaust gases depends on the position of the HP EGR valve 10a and the pressure difference between the first and second ends 12a, 12b of the HP EGR duct 12. For example, in the arrangement shown in Figures 1 and 2, when the pressure of exhaust gases within the HP exhaust duct 9b increases relative to the pressure of inlet gases within the HP inlet duct 6b, the flow rate of exhaust gases within the HP EGR duct 12 may increase for a given position of the HP EGR valve 10a.

Increasing the flow rate of EGR gases, either due to a change in the position of the HP EGR valve or a change in the pressure difference across the HP EGR duct 12, may lead to a reduction in the quantity of inlet air present in the intake gases being drawn into the cylinders of the engine 4, thereby reducing the quantity of fuel which may be combusted within the engine. The power generated by the engine 4 may therefore be reduced. Controlling the power generated by the engine in this way may be beneficial, as it may lead to a reduction in the production of pollutants, such as nitrous oxides, compared to controlling the engine 4 in other ways, for example by using an inlet throttle.

As described above, when increased power or torque is requested by a driver of the vehicle, the operation of the turbocharger assembly 14 may be controlled to increase the level of boost provided. In the arrangement depicted in Figure 1, controlling the turbocharger assembly to increase the level of boost may be achieved by adjusting the angle of the variable vanes of the turbine 14b.

Adjusting the angle of the vanes may reduce the area through which exhaust gases passing through the turbine 14b may flow. Hence, following control of the turbine in this way, the pressure of the exhaust gases upstream of the turbine, e.g. within the exhaust manifold 4b, may increase.

Similarly, in the arrangement shown in Figure 2, controlling the turbocharger assembly to increase the level of boost may be achieved by closing the wastegate 14d. Closing the wastegate may reduce the flow area available for exhaust gases to bypass the turbine 14b, which may lead to an increase in the pressure of exhaust gases within the HP exhaust duct 9b and/or the exhaust manifold 4b.

The increase in pressure of the exhaust gases upstream of the turbine 14b, due to the change in flow area through and/or bypassing the turbine, may occur at a higher rate than an increase in pressure of the inlet gases within the HP intake duct 6b, due to increased power being supplied to the compressor 14a, e.g. by the turbine 14b. This may result in a change in the pressure difference between the first and second ends 12a, 12b of the HP EGR duct 12, which may affect, e.g. increase, the flow rate of EGR gases within the HP EGR duct.

Hence, when the driver requests an increase in the power supplied by the engine, the interaction between the operation of the turbocharger assembly 14 and the HP EGR system 10, may lead to an undesirable decrease in the power being provided by the engine 4.

The position of the HP EGR valve 10a may be controlled at least partially based on the pressure difference across the HP EGR duct 12, hence the HP EGR valve 10a may be controlled to compensate this effect. However, if the driver requests a rapid increase in power to be supplied by the engine, the HP EGR valve 10a may not be controlled quickly enough to sufficiently compensate for the change in pressure difference across the HP EGR duct 12.

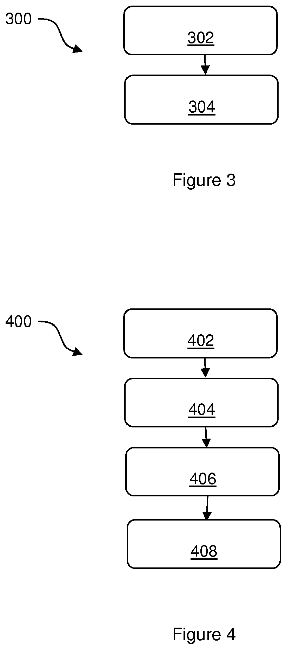

With reference to Figure 3, in order to prevent an undesirable decrease in engine power, a method 300 of operating an engine assembly, according to arrangements of the present disclosure, may be performed. The method comprises a first step 302 in which the pressure of exhaust gases upstream of the turbine 14b, e.g. within the HP exhaust duct 9b or the exhaust manifold 4b, is determined. In a second step 304, the operation of the turbocharger assembly is controlled according to the determined pressure.

The change in the pressure difference across the HP EGR duct 12 that may result from a change in the operation of the turbocharger assembly 14 may depend on the pressure of the exhaust gases upstream of the turbine 12b, e.g. within the exhaust manifold 4b of the engine. Hence, by controlling the operation of the turbocharger assembly 14 according to the exhaust manifold pressure, an undesirable reduction in the power provided by the engine may be avoided.

The pressure of the exhaust gases upstream of the turbine 14b may be measured using a pressure sensor provided on the HP exhaust duct 9b and/or the exhaust manifold 4b. Alternatively, the pressure of exhaust gases upstream of the turbine 14b may be modelled using a data model and/or determined by referring to a look-up table.

In one arrangement of the present disclosure, a data model is used that allows the pressure of exhaust gases upstream of the turbine 14b to be determined based on the geometry of the VGT 14b and/or position of the bypass valve 14d, the mass flow rate of exhaust gases through the turbine 14b and the pressure downstream of the turbine. However in other arrangements, it is envisaged that a data model or look-up table may be applied that allows the pressure of exhaust gases upstream of the turbine 14b to be determined based a combination of the geometry of the VGT 14b and/or position of the bypass valve 14d, the mass flow rate through the turbine, the pressure downstream of the turbine, the running speed of the engine, the position of the HP EGR valve 10b, the position of the LP EGR valve 16b described below, and/or any other suitable parameters of the engine assembly 2.

The method 300 further comprises determining a maximum permitted rate of increase in pressure of the exhaust gases upstream of the turbine. The operation of the turbocharger is controlled such that the rate of increase in pressure of the exhaust gases upstream of the turbine is maintained at or below the maximum permitted rate.

The maximum permitted rate of increase in pressure may be determined such that the HP EGR system 10 can be controlled to adequately compensate for changes in pressure difference across the HP EGR duct 12. For example, by varying the position of the HP EGR valve 10a to maintain the flow rate of recirculated exhaust gases within the HP EGR duct 12 at a desirable level.

Additionally, the method may comprise determining a maximum permitted value of pressure of the exhaust gases upstream of the turbine 14b. The operation of the turbocharger assembly 14 may be controlled such that the pressure of exhaust gases upstream of the turbine 12b is maintained at or below the maximum permitted value.

Figure 4 depicts a method 400 of operating an engine assembly according to an alternative arrangement of the present disclosure. The method 400 comprises a first step 402 in which, a pressure, e.g. current pressure, of the exhaust gases upstream of the turbine 14b is determined. In a second step 404, a maximum permitted rate of increase in pressure is determined. In a third step 406, a maximum permitted pressure value, e.g. after a particular time period, is calculated based on the maximum permitted rate and the determined pressure. In a fourth step 408, the operation of the turbocharger assembly 14 is controlled in order to maintain the pressure of the exhaust gases upstream of the turbine 14b at or below the maximum permitted pressure value.

In some arrangements, the maximum permitted value may be determined by applying the maximum permitted rate of pressure increase over a predetermined time period and adding the result to the current pressure of the exhaust gases. The predetermined time period may be the period over which the HP EGR valve 10a is expected to respond. Additionally or alternatively, if the method 300, 400 is being performed within an iterative control process, as described below, the predetermined time period may correspond to a time step over which iterations of the method 300, 400 are performed.

The effect of a change in the pressure of the exhaust gases within the HP exhaust duct 9b, e.g. relative to the pressure of the inlet gases within the HP intake duct 6b, on the flow rate of EGR gases within the HP EGR duct 12 may depend on the position of the HP EGR valve 10a. Hence, the method may comprise determining a position of the HP EGR valve 10a. The maximum permitted rate of increase in pressure and/or the maximum permitted value of pressure may be determined at least partially according to the position of the HP EGR valve 10a. The maximum permitted rate of increase may be determined by referring to a data model. In the arrangement shown in Figure 4, the maximum permitted rate of pressure increase is determined by referring to a data model that provides the maximum permitted rate of pressure increase as a function of the position of the HP EGR valve 10a, e.g. according to equation (1), in which $\Delta P_{3max}$ is the maximum permitted rate of increase in pressure of exhaust gases upstream of the turbine 14b.

$$\Delta P_{3max} = F_1(EGR\ Valve\ Position) \qquad (1)$$

The fourth step 408 may comprise determining a desirable geometry setting for the VGT, e.g. an angle of a variable vane of the VGT, and/or a desirable position for the bypass valve 14d, and setting the geometry of the VGT and/or the position of the bypass valve 14d according to the determined setting. The desirable setting may be determined by referring to a data model or look-up table. In one arrangement a data model is applied that allows the VGT geometry setting to be determined as a function of the maximum permitted value of pressure, the mass flow rate of exhaust gases through the turbine and the pressure downstream of the turbine 14b, e.g. according to equation (2), in which $P_{3max}$ is the maximum permitted value or pressure, $\dot{m}Turbine$ is the mass flow rate of exhaust gases through the turbine 14b and $P_4$ is the pressure of exhaust gases downstream of the turbine 14b.

$$VGT = F_2(P_{3max},\ \dot{m}Turbine,\ P_4) \qquad (2)$$

As described above, the increase in pressure of the exhaust gases upstream of the turbine 14b may result from a change in the flow area of exhaust gases flowing through and/or bypassing the turbine 14b. The increase in pressure resulting from a particular change in flow area may depend on the mass flow rate of exhaust gases flowing through and/or bypassing the turbine 14b. Hence, the method 300 may further comprise determining a mass flow rate of exhaust gases passing through and/or bypassing the turbine 14b. The operation of the turbine may be controlled at least partially according to the determined mass flow rate, e.g. in order to maintain the rate of increase in pressure of the exhaust gases upstream of the turbine at or below the maximum permitted rate.

The mass flow rate of exhaust gases flowing through the turbine 14b may depend on the pressure of exhaust gases downstream of the turbine. As shown in Figures 1 and 2, the engine assembly may further comprise a Low Pressure (LP) EGR system 16. The LP EGR system may comprise a LP EGR duct 16a configured to recirculate a portion of the exhaust gases from the LP exhaust duct 9a, e.g. a position downstream of the turbine 14b, to the LP intake duct 6a, e.g. a position upstream of the compressor 14a. The flow of exhaust gases through the LP EGR duct 16 may be controlled by an LP EGR valve 16b. The flow rate of exhaust gases through the LP EGR duct 16a, and hence, the position of the LP EGR valve may therefore affect the mass flow rate of exhaust gases through the turbine 14b.

The exhaust system 10 may further comprise one or more exhaust after-treatment devices 18 provided downstream of the turbine 14b. For example, as shown in Figures 1 and 2, the exhaust system 10 may comprise a lean NOx trap 18a, a particulate filter 18b and/or a selective catalytic reduction device 18c. The exhaust after-treatment devices may be configured to reduce the concentrations of polluting substances present within the exhaust gases.

One or more of the exhaust after-treatment devices 18 may be controllable, e.g. to adjust the efficiency with which they remove polluting substances from the exhaust gases. Controlling the operation of the exhaust after-treatment devices may affect the mass flow rate of exhaust gases through the exhaust system 10, and hence, through the turbine 14b.

Additionally or alternatively, following a period of operation of the exhaust after-treatment devices 18, the performance of the devices 18 may be reduced. For example, the particulate filter 18b and/or the lean NOx trap 18a may become full, reducing the rate at which they are able to remove polluting substances from the exhaust gases. As the performance of the exhaust after-treatment devices reduces, the mass flow rate of exhaust gases through the exhaust after-treatment devices and/or the difference in pressure across the exhaust after-treatment devices may vary.

The operation of the exhaust after-treatment devices may therefore affect the mass flow rate of exhaust gases through the turbine 14b as well as the pressure of the exhaust gases downstream, e.g. immediately downstream, of the turbine 14b. These factors may in turn affect the pressure upstream of the turbine 14b.

Hence, by determining the pressure of exhaust gasses upstream of the turbine and/or the mass flow rate of exhaust gases through the turbine 14b as part of the method 300, 400. The control of the turbocharger assembly 14 may be performed more accurately to reduce undesirable increases in the flow rate of exhaust gases through the HP EGR duct 12 and thereby reduce undesirable decreases in the power being provided by the engine 4.

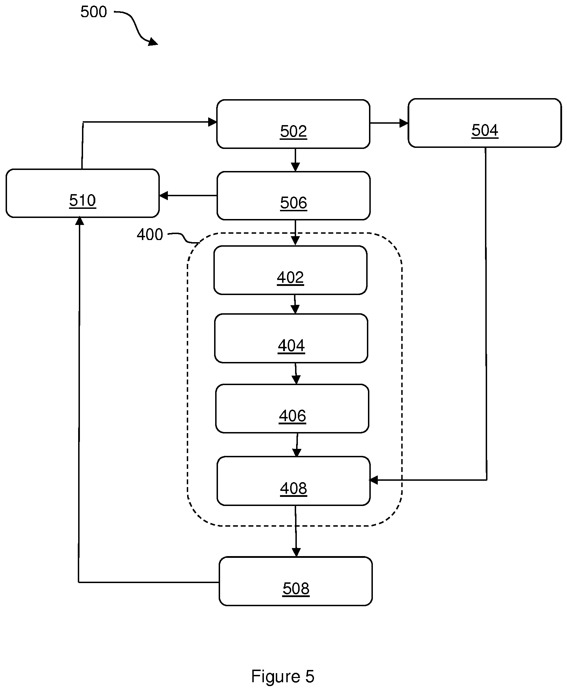

In some arrangements, the method of operating an engine assembly 300, 400 may be performed by a controller of the vehicle, such as an Electronic Control Unit (ECU) 100, depicted in Figures 1 and 2. With reference to Figure 5, the method 300, 400 may be performed by the ECU 100 within an iterative process 500, in which the method 300, 400 is repeated once during each time step of the iterative process 500.

In the arrangement shown in Figure 5, the method 400 depicted in Figure 4 is being performed within the iterative process 500. However, it is equally envisaged that the method 300 depicted in Figure 3 or any other suitable method of operating an engine assembly may be performed within the iterative process 500.

The iterative process 500 may be performed continuously, e.g. in a continuous loop, during operation of the vehicle. In other words, the iterative process 500 may be performed whether or not the driver of the vehicle, the controller 100 or another controller of the vehicle has requested an increase in torque to be provided. However, it may be undesirable to perform the method 300, 400 when increased torque has not been requested by the driver or the vehicle controller. Hence, the process 500 may comprise a first process step 502 in which a request for an increased amount of torque to be supplied by the engine is detected.

If it is determined, in the first process step 502, that the driver or the vehicle controller is requesting an increase in the amount of torque provided by the engine, compared to the last time the iterative process 500 was performed, e.g. the last iteration, it may be determined that the method 400 should be implemented in order to control the operation of the turbocharger assembly 14 whilst preventing undesirable increases in the flow rate of exhaust gases through the HP EGR duct 12.

The controller 100 may comprise a memory (not shown) associated with the controller. The controller 100 may store an indication, or flag, in in the memory indicating whether a request for an increase in torque has been detected. Hence, if it is determined, in the first process step 502, that the driver is requesting an increase in torque, the controller 100 may store the indication in the memory.

As shown in Figure 5, when the request for increased torque is first detected, e.g. in the iteration of the process 500 when the request is detected, it may be beneficial to control the operation of the turbocharger assembly 14 such that the pressure of exhaust gases upstream of the turbine 14b remains substantially constant during the current time step. Hence, in a second process step 504, the maximum permitted pressure of the exhaust gases may be set to be equal to the current exhaust gas pressure. The maximum permitted pressure and/or the current gas pressure may be stored in the memory.

After performing the second process step 504, the iterative process 500 may proceed to the fourth method step 408, in which the operation of the turbocharger assembly is controlled in order to maintain the pressure of the exhaust gases upstream of the turbine 14b at or below the maximum permitted pressure value.

If it is determined, in the first process step 502, that the driver is not requesting an increase in torque, compared to the previous time step, the process may progress to a third process step 506 in which it is determined whether the indication has been stored in the memory indicating that the request for increased torque has been detected in a previous time step.

If it is determined, in the third process step 506 that the indication has not been stored in the memory, the current iteration of the process 500 may end. In this case, the process 500 may not affect the control of the turbocharger assembly 14. In some arrangements, the process 500 may apply an unlimited control to the turbocharger assembly that has been calculated by another process of the ECU 100 or another controller and has not been limited or restricted by the method 400. When the process 500 ends in this way, the next iteration of the process 500 may begin immediately. Alternatively, the process may proceed to a fifth process step 510, in which the process waits until the current time step has elapsed before beginning the next iteration of the process 500.

Alternatively, if it is determined, in the third process step 506, that the indication has been stored in the memory, the process 500 may perform the method 400, as described above with reference to Figure 4, in order to control the operation of the turbocharger assembly 14. As mentioned above, in the second process step 504, the maximum permitted pressure and/or the current pressure may be stored in the memory. It may be assumed that the turbocharger 14 is controlled in each time step, such that the pressure of exhaust gases is substantially equal to the maximum permitted pressure, e.g. at the end of the time step. Hence, the pressure of the exhaust gases may be determined, in the first method step 402, by referring to the maximum permitted pressure stored in the memory during the previous time step. Alternatively, when the method 400 is being performed as part of the iterative process 500, the first method step 402 may be omitted and the controller 100 may refer to one or more of the pressure values stored in memory when performing the third method step 406.

As mentioned above, in the third method step 406, the maximum permitted pressure value may be calculated by multiplying the maximum permitted rate of increase in pressure by the time step over which each iteration of the process is being performed, and adding to the result to the current pressure of exhaust gases upstream of the turbine 14b, e.g. the pressure determined in the first method step 402 and/or retrieved from the memory. When the method 400 is being performed as part of the iterative process 500, the maximum permitted pressure value determined in the third method step 406 may be stored in the memory, e.g. to be used as the current pressure value in the next iteration of the process 500.

As described above, it may be beneficial to control the operation of the turbocharger assembly 14 using the method 400 when the HP EGR system is unable to respond to changes in the pressure of exhaust gases upstream of the turbine 14b caused by a change in the operation of the turbocharger assembly 14. It may therefore be particularly beneficial for the method 400 to be performed during a period of time following, e.g. immediately after, a request being made by the driver for the engine to supply an increased torque.

Performing the method 400 during each iteration of the iterative process 500 may be computationally expensive for the ECU 100. Hence, after performing the method 400, the process may proceed to a fourth process step 508, in which it is determined whether a predetermined period of time has elapsed since the indication was stored in the memory. If the predetermined period has lapsed, the indication may be cleared from the memory. This may allow subsequent iterations of the process 500 to end in the third process step 506, as described above, without performing the method 400. Otherwise, the iteration of the process 500 may be ended without the indication being cleared, e.g. such that the method 400 may be performed in the next iteration of the process 500.

When the iterative process 500 reaches an end of a particular iteration, the ECU 100 may restart the iterative process at the first process step 502. The ECU 100 may restart the process 500 immediately. Alternatively, the ECU may wait, in the fifth process step 510, to allow the time step to elapse before performing another iteration of the process 500.

Applying the iterative process 500 described above, in which the method 400 is repeated in each time step, may allow the pressure of exhaust gases upstream of the turbine 14b to be closely controlled, such that the turbocharger 14 may operate to provide the greatest pressure boost to inlet air, without the flow rate of recirculated exhaust gases being undesirably increased. Applying the process 500 may therefore allow the power produced by the engine assembly to be increased.

This application claims priority from United Kingdom patent application GB 1608717.3.

## Claims

1. A method of operating an engine assembly (2), the engine assembly comprising:

an engine (4);

a turbocharger assembly (14), the operation of the turbocharger assembly being controllable in order to control a level of boost provided by the turbocharger assembly; and

an Exhaust Gas Recirculation (EGR) duct (12) configured to recirculate exhaust gases from a position upstream of a turbine (14b) of the turbocharger assembly, to an inlet of the engine, the flow of exhaust gases within the EGR duct being controlled by an EGR valve (10a), the method comprising:

> determining a pressure of exhaust gases upstream of the turbine;
> controlling the operation of the turbocharger assembly according to the pressure of the exhaust gases upstream of the turbine;
> determining a position of the EGR valve (10a);
> determining a maximum permitted rate of increase in pressure of the exhaust gases upstream of the turbine (14b) as a function of the position of the EGR valve; and
> controlling the operation of the turbocharger assembly (14) such that the rate of increase in pressure of the exhaust gases is maintained at or below the maximum permitted rate.

2. The method of claim 1, wherein the method further comprises:

> determining a maximum permitted value of pressure of the exhaust gases upstream of the turbine (14b) according to the position of the EGR valve; and
> controlling the operation of the turbocharger assembly (14) such that the pressure of the exhaust gases is maintained at or below the maximum permitted value.

3. The method according to any of the preceding claims, wherein the method further comprises:
determining a mass flow rate of exhaust gases through the turbine (14b); wherein the operation of the turbocharger assembly (14) is controlled according to the mass flow rate of exhaust gases through the turbine.

4. The method according to any of the preceding claims, wherein the method is performed iteratively over a plurality of time steps, each step of the method being performed during each time step.

5. The method according to claim 4, when depending on claim 2, wherein the maximum permitted value of pressure is determined by:

> multiplying the maximum permitted rate of increase in pressure by the length of the time step to calculate a maximum permitted increase in pressure; and
> adding the maximum permitted increase to the determined pressure of exhaust gases upstream of the turbine (14b).

6. The method according to claim 4 or 5, wherein iteration of the steps of the method continues until a predetermined period of time has elapsed.

7. The method according to any of the preceding claims, wherein the turbocharger assembly (14) comprises a Variable Geometry Turbine (VGT) (14b); and
wherein the operation of the turbocharger assembly (14) is controlled by varying the geometry of the VGT (14b).

8. The method according to any of the preceding claims, wherein the turbocharger assembly comprises a turbocharger assembly bypass duct (14c), configured to permit exhaust gases to bypass a turbine (14b) of the turbocharger assembly (14), wherein the flow of exhaust gases through the bypass duct is controlled by a bypass valve (14d); and
wherein the operation of the turbocharger assembly is controlled by varying the position of the bypass valve.

9. The method according to any of the preceding claims, wherein the method further comprises:
varying the position of the EGR valve (10a) such that the flow rate of exhaust gases within the EGR duct (12) remains substantially constant.

10. An engine assembly (2) for a motor vehicle, the engine assembly comprising:

> an engine (4);
> a turbocharger assembly (14), the operation of the turbocharger assembly being controllable in order to control a level of boost provided by the turbocharger assembly;
an Exhaust Gas Recirculation (EGR) duct (12) configured to recirculate exhaust gases from a position upstream of a turbine (14b) of the turbocharger assembly, to an inlet of the engine, the flow of exhaust gases within the EGR duct being controlled by an EGR valve (10a); and
a controller (100) configured to perform the method of any of the preceding claims.

11. The engine assembly (2) of claim 10, wherein the assembly further comprises:
a low pressure EGR duct (16a) configured to recirculate exhaust gases from a position downstream of the turbine (14b) to a position upstream of a compressor (14a) of the turbocharger assembly (14).

12. A vehicle comprising the engine assembly (2) of claim 10 or 11.

**Patentansprüche**

1. Verfahren zum Betreiben einer Motoranordnung (2), wobei die Motoranordnung Folgendes aufweist:

einen Motor (4);
eine Turboladeranordnung (14), wobei der Betrieb der Turboladeranordnung derart steuerbar ist, um eine Lademenge, die von der Turboladeranordnung bereitgestellt wird, zu steuern; und
eine Abgasrückführungs(AGR)-Leitung (12), die dazu ausgelegt ist, Abgase von einer Stelle stromaufwärts einer Turbine (14b) der Turboladeranordnung zu einem Einlass des Motors rückzuführen, wobei der Abgasstrom in der AGR-Leitung von einem AGR-Ventil (10a) gesteuert wird, wobei das Verfahren Folgende aufweist:

Bestimmen eines Drucks der Abgase stromaufwärts der Turbine;
Steuern des Betriebs der Turboladeranordnung gemäß dem Druck der Abgase stromaufwärts der Turbine;
Bestimmen einer Stellung des AGR-Ventils (10a);
Bestimmen einer maximal erlaubten Drucksteigerungsrate der Abgase stromaufwärts der Turbine (14b) als eine Funktion der Stellung des AGR-Ventils; und
Steuern des Betriebs der Turboladeranordnung (14) derart, dass die Drucksteigerungsrate der Abgase mit oder unter der maximal gestatteten Rate beibehalten wird.

2. Verfahren nach Anspruch 1, wobei das Verfahren ferner Folgendes aufweist:

Bestimmen eines maximal erlaubten Druckwerts der Abgase stromaufwärts der Turbine (14b) gemäß der Stellung des AGR-Ventils; und
Steuern des Betriebs der Turboladeranordnung (14) derart, dass der Druck der Abgase mit oder unter dem maximal gestatteten Wert beibehalten wird.

3. Verfahren nach einem der vorhergehenden Ansprüche, wobei das Verfahren ferner Folgendes aufweist:
Bestimmen eines Mengendurchflusses von Abgasen durch die Turbine (14b); wobei der Betrieb der Turboladeranordnung (14) gemäß des Mengendurchflusses der Abgase durch die Turbine gesteuert wird.

4. Verfahren nach einem der vorhergehenden Ansprüche, wobei das Verfahren iterativ über eine Vielzahl von Zeitschritten durchgeführt wird, wobei jeder Schritt des Verfahrens während jedes Zeitschritts durchgeführt wird.

5. Verfahren nach Anspruch 4, wenn in Abhängigkeit von Anspruch 2, wobei der maximal gestattete Druckwert durch Folgendes bestimmt wird:

Multiplizieren der maximal gestatteten Drucksteigerungsrate mit der Dauer der Zeitschritte zum Berechnen einer maximal gestatteten Drucksteigerung; und
Addieren der maximal gestatteten Steigerung des vorbestimmten Drucks der Abgase stromaufwärts der Turbine (14b).

6. Verfahren nach Anspruch 4 oder 5, wobei die Iteration der Schritte des Verfahrens fortsetzt, bis eine vorbestimmte Zeitperiode abgelaufen ist.

7. Verfahren nach einem der vorhergehenden Ansprüche, wobei die Turboladeranordnung (14) eine variable Turbinengeometrie (VTG) (14b) aufweist; und wobei der Betrieb der Turboladeranordnung (14) durch Variieren der Geometrie der VTG (14b) gesteuert wird.

8. Verfahren nach einem der vorhergehenden Ansprüche, wobei die Turboladeranordnung eine Turboladeranordnungsumgehungsleitung (14c) aufweist, die dazu ausgelegt ist, zu gestatten, dass Abgase eine Turbine (14b) der Turboladeranordnung (14) umgehen, wobei der Abgasstrom durch die Umgehungsleitung durch das Umgehungsventil (14d) gesteuert wird; und
wobei der Betrieb der Turboladeranordnung durch Variieren der Stellung des Umgehungsventils gesteuert wird.

9. Verfahren nach einem der vorhergehenden Ansprüche, wobei das Verfahren ferner Folgendes aufweist:
Variieren der Stellung des AGR-Ventils (10a) derart, dass die Durchflussmenge der Abgase in der AGR-Leitung (12) im Wesentlichen konstant bleibt.

10. Motoranordnung (2) für ein Kraftfahrzeug, wobei die Motoranordnung Folgendes aufweist:

einen Motor (4);
eine Turboladeranordnung (14), wobei der Betrieb der Turboladeranordnung derart steuerbar ist, um eine Lademenge, die von der Turboladeranordnung bereitgestellt wird, zu steuern;
eine Abgasrückführungs(AGR)-Leitung (12), die dazu ausgelegt ist, Abgase von einer Stelle stromaufwärts einer Turbine (14b) der Turboladeranordnung zu einem Einlass des Motors rückzuführen, wobei der Abgasstrom in der AGR-Leitung von einem AGR-Ventil (10a) gesteuert wird; und
eine Steuerung (100), die dazu ausgelegt ist, das Verfahren gemäß einem der vorhergehenden Ansprüche auszuführen.

11. Motoranordnung (2) nach Anspruch 10, wobei das Verfahren ferner Folgendes aufweist:
eine Niederdruck-AGR-Leitung (16a), die dazu ausgelegt ist, Abgase von einer Stelle stromabwärts der Turbine (14b) zu einer Stelle stromaufwärts eines Verdichters (14a) der Turboladeranordnung (14) rückzuführen.

12. Fahrzeug, das die Motoranordnung (2) gemäß Anspruch 10 oder 11 aufweist.

**Revendications**

1. Un procédé d'utilisation d'un ensemble moteur (2), l'ensemble moteur comportant :

un moteur (4) ;
un ensemble turbocompresseur (14), le fonctionnement de l'ensemble turbocompresseur pouvant être régulé afin de réguler un niveau de suralimentation fourni par l'ensemble turbocompresseur ;
et un conduit de recirculation des gaz d'échappement (RGE) (12) conçu pour la recirculation des gaz d'échappement à partir d'une position en amont d'une turbine (14b) de l'ensemble turbocompresseur, à un orifice d'admission du moteur, l'écoulement des gaz d'échappement à l'intérieur du conduit de RGE étant régulé par une soupape de RGE (10a), le procédé comprenant :

la détermination de la pression des gaz d'échappement en amont de la turbine ;
la régulation du fonctionnement de l'ensemble turbocompresseur selon la pression des gaz d'échappement en amont de la turbine ;
la détermination d'une position de la soupape de RGE (10a) ;
la détermination d'un taux maximal autorisé d'augmentation de la pression des gaz d'échappement en amont de la turbine (14b) en fonction de la position de la soupape de RGE,
et la régulation du fonctionnement de l'ensemble turbocompresseur (14), de sorte que le taux d'augmentation de la pression des gaz d'échappement est maintenu au niveau ou au-dessous du taux maximal autorisé.

2. Le procédé selon la revendication 1
dans lequel le procédé comprend en outre :

la détermination d'une valeur maximale autorisée d'augmentation de la pression des gaz d'échappement en amont de la turbine (14b) selon la position de la soupape de RGE,

et la régulation du fonctionnement de l'ensemble turbocompresseur (14), de sorte que la pression des gaz d'échappement est maintenue au niveau ou au-dessous de la valeur maximale autorisée.

3. Le procédé selon l'une quelconque des revendications précédentes, dans lequel le procédé comprend en outre :

la détermination d'un débit massique des gaz d'échappement à travers la turbine (14b) ; dans lequel le fonctionnement de l'ensemble turbocompresseur (14) est régulé selon le débit massique des gaz d'échappement à travers la turbine.

4. Le procédé selon l'une quelconque des revendications précédentes, dans lequel le procédé est effectué de manière itérative sur une pluralité d'intervalles de temps, chaque étape du procédé étant effectuée au cours de chaque intervalle de temps.

5. Le procédé selon la revendication 4, lorsqu'il dépend de la revendication 2, dans lequel la valeur maximale autorisée de pression est déterminée par :

la multiplication du taux maximal autorisé d'augmentation de la pression par la longueur de l'intervalle de temps pour calculer une augmentation maximale autorisée de la pression ; et l'ajout de l'augmentation maximale autorisée à la pression déterminée des gaz d'échappement en amont de la turbine (14b).

6. Le procédé selon la revendication 4 ou 5, dans lequel l'itération des étapes du procédé continue jusqu'à ce qu'une période de temps prédéfinie se soit écoulée.

7. Le procédé selon l'une quelconque des revendications précédentes, dans lequel l'ensemble turbocompresseur (14) comprend une turbine à géométrie variable (VGT) (14b) ; et dans lequel le fonctionnement de l'ensemble turbocompresseur (14) est régulé en faisant varier la géométrie du VGT (14b).

8. Le procédé selon l'une quelconque des revendications précédentes, dans lequel l'ensemble turbocompresseur comprend un conduit de dérivation de l'ensemble turbocompresseur (14c), conçu pour permettre aux gaz d'échappement de contourner une turbine (14b) de l'ensemble turbocompresseur (14), dans lequel l'écoulement des gaz d'échappement à travers le conduit de dérivation est régulé par une soupape de dérivation (14d) ; et dans lequel le fonctionnement de l'ensemble turbocompresseur est régulé en faisant varier la position de la soupape de dérivation.

9. Le procédé selon l'une quelconque des revendications précédentes, dans lequel le procédé comprenant en outre : la variation de la position de la soupape de RGE (10a) de sorte que le débit des gaz d'échappement à l'intérieur du conduit de RGE (12) demeure sensiblement constant.

10. Un ensemble moteur (2) destiné à un véhicule automobile, l'ensemble moteur comportant :

un moteur (4) ; un ensemble turbocompresseur (14), le fonctionnement de l'ensemble turbocompresseur pouvant être régulé afin de réguler un niveau de suralimentation fourni par l'ensemble turbocompresseur ; un conduit de recirculation des gaz d'échappement (RGE) (12) conçu pour la recirculation des gaz d'échappement à partir d'une position en amont d'une turbine (14b) de l'ensemble turbocompresseur, à un orifice d'admission du moteur, l'écoulement des gaz d'échappement à l'intérieur du conduit de RGE étant régulé par une soupape de RGE (10a) ; et un dispositif de régulation (100) configuré pour réaliser le procédé de l'une quelconque des revendications précédentes.

11. L'ensemble moteur (2) selon la revendication 10, dans lequel l'ensemble comprend en outre :

un conduit de RGE à basse pression (16a) conçu pour la recirculation des gaz d'échappement à partir d'une position en aval de la turbine (14b) à une position en amont d'un compresseur (14a) de l'ensemble turbocompresseur (14).

12. Un véhicule comprenant l'ensemble moteur (2) selon la revendication 10 ou 11.

Figure 1

EP 3 246 549 B1

Figure 2

300

302

304

Figure 3

400

402

404

406

408

Figure 4

500

502

504

510

506

400

402

404

406

408

508

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015337720 A1
- EP 2772629 A1
- US 2016131089 A
- DE 102008063935 A1
- FR 3021702 A1
- EP 0984153 A2
- US 6718767 B1
- GB 1608717 A